(19) **Europäisches Patentamt**

**European Patent Office**

**Office européen des brevets**

(11) **EP 1 686 821 A1**

(12) **EUROPEAN PATENT APPLICATION**

(43) Date of publication:
02.08.2006 Bulletin 2006/31

(51) Int Cl.:
*H04Q 7/38* (2006.01)

(21) Application number: 05250916.3

(22) Date of filing: 17.02.2005

| | |
|---|---|
| (84) Designated Contracting States:<br>AT BE BG CH CY CZ DE DK EE ES FI FR GB GR<br>HU IE IS IT LI LT LU MC NL PL PT RO SE SI SK TR<br>Designated Extension States:<br>AL BA HR LV MK YU | (72) Inventors:<br>• **Dekorsy, Armin**<br>  **90489 Nuremburg (DE)**<br>• **Derakhsan, Fariborz**<br>  **90491 Nuremberg (DE)** |
| (30) Priority: **27.01.2005 US 44248** | (74) Representative: **Sarup, David Alexander et al**<br>**Lucent Technologies EUR-IP UK Ltd**<br>**Unit 18, Core 3**<br>**Workzone**<br>**Innova Business Park**<br>**Electric Avenue**<br>**Enfield, EN3 7XU (GB)** |
| (71) Applicants:<br>• **LUCENT TECHNOLOGIES INC.**<br>  **Murray Hill, New Jersey 07974-0636 (US)**<br>• **Lucent Technologies Network Systems GmbH**<br>  **90411 Nürnberg (DE)**<br>  Designated Contracting States:<br>  **DE** | |

(54) **Balancing load of cells in inter-frequency handover in multi-band cellular communication networks**

(57) The present invention provides a method and an apparatus for allocating frequency bands associated with a multi-band network across a first and a second cell in a communications system. The method comprises determining a load parameter associated with the first and second cells in the communications system (500,610), selecting a target cell among the first and second cells for a mobile wireless device for transferring the mobile wireless device from a first frequency band to a second frequency band based on the load parameter of the first and second cells (505,620,630). In one embodiment, selection of an appropriate frequency band may be realized for a mobile wireless device in a multi-band network based on measurements of pilot channel properties and a load parameter to take into account a cell load of a target set of cells for an inter-frequency handover. This integration of the cell load for ranking, selection and transfer of user to a target cell from an overloaded cell may prevent unnecessary inter-frequency handover of users to cells with a relatively higher load, resulting in an increase in overall system capacity as well as quality of service.

FIGURE 6

EP 1 686 821 A1

Description

# 1. FIELD OF THE INVENTION

This invention relates generally to telecommunications, and more particularly, to wireless communications.

# 2. DESCRIPTION OF THE RELATED ART

A service provider or network operator generally provides a variety of multimedia data and/or voice communication services to different users over a wireless network in a communications system. To render such data and/or voice communication services, these providers or operators manage radio resources including system capacity or throughput. Using these radio resources, a user of a mobile wireless device may avail any one or more of the data and/or voice communication services. A communications system may exchange information for these services across a network according to one or more protocols. To this end, a plurality of base stations may be distributed within an area to be serviced by a digital cellular network.

In operation, various users within the area, fixed or mobile, may access the communications system and, thus, other interconnected wireless telecommunications systems, via one or more of the base stations. Each area covered by a base station is commonly referred to as a cell. Each of the base stations is set to transmit at a preselected pilot power level sufficient to cover its cell, such that the combined effect is to cover the entire region. The pilot channels are broadcast in the downlink to allow cell identification and receipt level measurements.

As a user moves across a network service region, a mobile wireless device maintains communications with the wireless telecommunications system by communicating with one and then another base station. The mobile wireless device may communicate with the closest base station, the base station with the strongest signal, the base station with a capacity sufficient to accept communications, etc. During operation, for example, a mobile wireless device or a mobile terminal or a Mobile Station (MS), such as User Equipment (UE) often changes from one cell to another. This cell change or transfer procedure is generally called handover.

To decide when a handover is necessary, the mobile wireless device and a base station make certain measurements during the conversation. For example, a GSM network may broadcast the mobile wireless device a list of neighboring cells to be measured. The measurements may be sent to the base station and also to a Radio Network Controller (RNC). The RNC connects the base station to a Core Network (CN). Using these measurements from the mobile wireless device, the RNC may determine a cell, among the neighboring cells, which could be used for an eventual handover.

For operating a multi-band 2G network, such as a Global System of Mobile Communications (GSM) network, many network operators or service providers use at least two different frequency bands. As one example, two frequency bands that are generally used in the United States of America (USA) market are GSM850 at 850 MHz and GSM1900 at 1900 MHz, and in the European Union (EU) market are GSM900 at 900 MHz and GSM1800 at 1800 MHz. The Third Generation Partnership Project (3GPP) Universal Mobile Telephone System (UMTS, 3G1x) may operate at different frequency bands. For instance, network operators or service providers such as AWS Convergence Technologies, Inc. of Gaithersburg, MD, USA or Cingular Wireless of Atlanta, GA, USA own double-band licenses for operating UMTS850 or UMTS1900 networks.

The base stations (i.e., Node Bs) in conventional 3GPP standard based UMTS networks operate at carrier frequencies of about 2000 MHz with a maximum transmit power of 43 dBm. About 10% of this power is continuously used for the transmission of a common pilot channel (CPICH). However, most of the inter-frequency handover algorithms are based on measurements on a Primary Common Pilot Channel (P-CPICH) performed by mobile wireless devices in a communications system. These measurements on the pilot channel reflect the quality of a received signal by a user. As one example, an inter-frequency handover algorithm based on a UMTS standard release uses P-CPICH $(E_c/I_0)$ values measured by the mobile wireless devices. The cell, at the other frequency, to which a mobile wireless device is handed over to, is a cell selected from a target set of cells with a best quality of the received signal. That is, within the target set of cells, different cells are ranked according to the measured P-CPICH $(E_c/I_0)$ levels. Based on the rank, a target cell is selected to which the mobile wireless device may be handed over from a current cell.

For most multi-band networks, the UMTS standard based inter-frequency handover algorithm implements an inter-frequency handover as a hard handover between the different frequency bands [See 3GPP TS 25.331 Radio Resource Control (RRC), Protocol Specification (Release 6); 3GPP TR 25.931 UTRAN Functions]. This inter-frequency handover algorithm does not consider any network aspects for the hard handover.

However, in such flexible multi-band networks, a relatively higher spectral efficiency that maximizes usage of an extremely cost intensive frequency spectrum is desired. Moreover, radio resource management that efficiently exploits the resources of frequency bands in terms of high system capacity, better QoS and user satisfaction is difficult to achieve because of constant intra-frequency and inter-frequency handovers at different frequency bands. Any undesired or improper intra-frequency or inter-frequency handover at different frequencies reduces the rate at which data/information may be transmitted between a mobile station and a base station. Reduced throughput results in inefficient usage of radio resources, such that the cell resources may produce significantly lower data-transfer rates, which is particularly unacceptable for high-speed content-intensive data and/or voice communication services.

The present invention is directed to overcoming, or at least reducing, the effects of, one or more of the problems set forth above.

## SUMMARY OF THE INVENTION

In one embodiment of the present invention, a method is provided for allocating frequency bands associated with a multi-band network across a first and a second cell in a communications system. The method comprises determining a load parameter associated with the first and second cells in the communications system, selecting a target cell among the first and second cells for a mobile wireless device for transferring the mobile wireless device from a first frequency band to a second frequency band based on the load parameter of the first and second cells.

In another embodiment, a method is provided for controlling a communications system including a first and a second base station and a radio network controller. The method comprises determining a load parameter associated with the first and second cells in the communications system. The method further comprises executing instructions at a mobile wireless device to measure pilot power of a first common pilot channel associated with a first frequency band from a first base station associated with the first cell, executing instructions at the mobile wireless device to measure pilot power of a second common pilot channel associated with a second frequency band from the first base station associated with the second cell or from a second base station associated with the second cell and executing instructions at the radio network controller to cause an inter-frequency handover for a user of the mobile wireless device. Finally, a target cell may be selected among the first and second cells for transferring the mobile wireless device from a first to a second frequency band associated with a multi-band network based on the load parameter associated with the first and second cells together with the measured pilot power of the first and second common pilot channels.

In yet another embodiment, a communications system comprises a first and a second base station associated with a multi-band network, a radio network controller coupled to the first and second base stations, and a storage coupled to the radio network controller. The storage may store instructions to cause an inter-frequency handover for a user of a mobile wireless device that determines a load parameter associated with a first and second cell in the communications system, measures pilot power of a first common pilot channel associated with a first frequency band from a first base station associated with the first cell and measures pilot power of a second common pilot channel associated with a second frequency band from the first base station associated with the second cell or from a second base station associated with the second cell, and selects a target cell among the first and second cells for transferring the mobile wireless device from the first to the second frequency band associated with a multi-band network based on the load parameter associated with the first and second cells together with the measured pilot power of the first and second common pilot channels.

In still another embodiment, an article comprising a computer readable storage medium storing instructions that, when executed cause a communications system to determine a load parameter associated with a first and a second cell in the communications system for allocating frequency bands associated with a multi-band network across the first and second cells in the communications system, and select a target cell among the first and second cells for a mobile wireless device for transferring the mobile wireless device from a first frequency band to a second frequency band based on the load parameter of the first and second cells.

In a further embodiment, an article comprising a computer readable storage medium storing instructions that, when executed cause a communications system to determine a load parameter associated with a first and a second cell in the communications system for controlling the communications system including a first and a second base station and a radio network controller. Instructions may be executed at a mobile wireless device to measure pilot power of a first common pilot channel associated with a first frequency band from a first base station associated with the first cell. Likewise, instructions may be executed at the mobile wireless device to measure pilot power of a second common pilot channel associated with the second frequency band from the first base station associated with the second cell or from a second base station associated with the second cell. Moreover, instructions may be executed at the radio network controller to cause an inter-frequency handover for a user of the mobile wireless device. In this way, a target cell may be selected among the first and second cells for transferring the mobile wireless device from a first to a second frequency band associated with a multi-band network based on the load parameter associated with the first and second cells together with the measured pilot power of the first and second common pilot channels.

In an exemplary embodiment, an apparatus is provided for allocating frequency bands associated with a multi-band network across a first and a second cell in a communications system. The apparatus comprises means for determining a load parameter associated with the first and second cells in the communications system and means for selecting a target cell among the first and second cells for a mobile wireless device to transfer the mobile wireless device from a first frequency band to a second frequency band based on the load parameter of the first and second cells.

In another exemplary embodiment, an apparatus is provided for controlling a communications system including a first and a second base station and a radio network controller. The apparatus comprises means for determining a load parameter associated with the first and second cells in the communications system, means for executing instructions at a mobile wireless device to measure pilot power of a first common pilot channel associated with a first frequency band from a first base station associated with the first cell, means for executing instructions at the mobile wireless device to measure pilot power of a second common pilot channel associated with a second frequency band from the first base station associated with the second cell or from a second base station associated with the second cell, means for executing instructions at the radio network controller to cause an inter-frequency handover for a user of the mobile wireless device, and means for selecting a target cell among the first and second cells to transfer the mobile wireless device from a first to a second frequency band associated with a multi-band network based on the load parameter associated with the first and second cells together with the measured pilot power of the first and second common pilot channels.

## BRIEF DESCRIPTION OF THE DRAWINGS

The invention may be understood by reference to the following description taken in conjunction with the accompanying drawings, in which like reference numerals identify like elements, and in which:

Figure 1 is a block diagram of a communications system, in accordance with one embodiment of the present invention;

Figure 2A schematically depicts two frequency bands for a hierarchical cell structure in the communications system shown in Figure 1 where a first frequency ($f_1$) is assigned to macro cells and a second frequency ($f_2$) to micro cells to benefit from the combined radio resources of both frequency bands consistent with an embodiment of the instant invention;

Figure 2B schematically depicts another example of a hotspot scenario in the communications system shown in Figure 1 where the second frequency ($f_2$) is allocated besides the first frequency ($f_1$) to the hotspot to split the hotspot consistent with an embodiment of the instant invention;

Figure 3 illustrates a flow chart of power rise/noise rise versus system load in the communications system shown in Figure 1 as well as a typical Call Admission Control (CAC) threshold and Congestion Control (ConC) threshold in accordance with one embodiment of the present invention;

Figure 4 is a stylistic representation of a region in which the communications system of Figure 1 may be employed for balancing load in inter-frequency handover of wireless communications across an overloaded cell and a target cell according to one embodiment of the present invention;

Figure 5 is a flow diagram illustrating one embodiment of the interoperation of the various components including a pilot power measuring algorithm at a mobile wireless device and a cell load based an inter-frequency handover algorithm at a radio network controller coupled to a first and a second base station of the communications system of Figures 1 and 4 for allocating frequency bands associated with a multi-band network across the overloaded and target cells shown in Figure 4; and

Figure 6 is a flow diagram illustrating one embodiment of a control strategy employed in the communications system of Figures 1-4 for selecting a target cell and handling the inter-frequency handover based on the measured pilot power of the pilot channel and the load parameter of the overloaded and target cells shown in Figure 4.

While the invention is susceptible to various modifications and alternative forms, specific embodiments thereof have been shown by way of example in the drawings and are herein described in detail. It should be understood, however, that the description herein of specific embodiments is not intended to limit the invention to the particular forms disclosed, but on the contrary, the intention is to cover all modifications, equivalents, and alternatives falling within the spirit and scope of the invention as defined by the appended claims.

## DETAILED DESCRIPTION OF SPECIFIC EMBODIMENTS

Illustrative embodiments of the invention are described below. In the interest of clarity, not all features of an actual implementation are described in this specification. It will of course be appreciated that in the development of any such actual embodiment, numerous implementation-specific decisions must be made to achieve the developers' specific goals, such as compliance with system-related and business-related constraints, which will vary from one implementation to another. Moreover, it should be appreciated that such a development effort might be complex and time-consuming, but may nevertheless be a routine undertaking for those of ordinary skill in the art having the benefit of this disclosure.

Generally, a radio resource management algorithm provides for an inter-frequency handover based on cell loads in addition to primary pilot channel information, such as pilot power of a first and second common pilot channels. This inter-frequency handover may increase overall capacity as well as Quality of Service (QoS) of a multi-band network in a communications system. A method is provided for allocating frequency bands associated with a multi-band network across a first and a second cell in a communications system. The method comprises determining a load parameter associated with the first and second cells in the communications system, selecting a target cell among the first and second cells for a mobile wireless device for transferring the mobile wireless device from a first frequency band to a second frequency band based on the load parameter of the first and second cells. As inter-frequency handover algorithm may ensure an improved system capacity and an improved QoS at different frequency bands. Thus, enabling network operators and/or service providers to achieve a relatively higher spectral efficiency and increased usage of the cost intensive spectrum by substantially utilizing resources of their frequency bands.

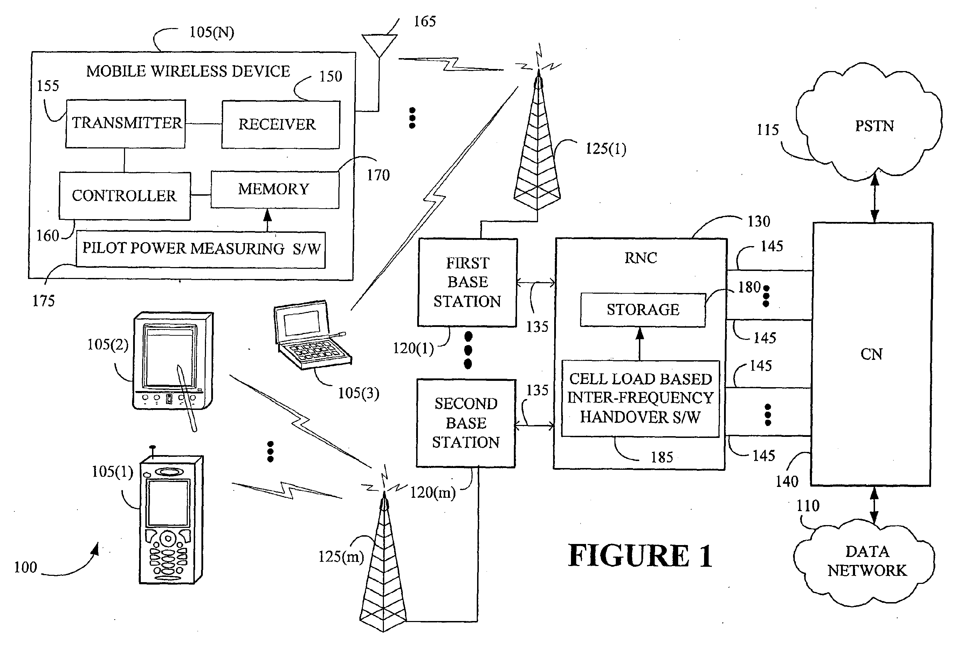

Turning now to the drawings, and specifically referring to Figure 1, a communications system 100 is illustrated, in accordance with one embodiment of the present invention. Examples of the communications system 100 of Figure 1 include a Universal Mobile Telecommunication System (UMTS), although it should be understood that the present invention may be applicable to other systems that support data and/or voice communication. Using the communications system 100, one or more mobile wireless devices 105(1-N) may communicate with a data network 110, such as the Internet, and/or a public telephone system (PSTN) 115 through one or more base stations including a first and a second base station 120(1-m).

In one embodiment, the data network 110 may be a packet-switched data network, such as a data network according to the Internet Protocol (IP). One version of IP is described in Request for Comments (RFC) 791, entitled "Internet Protocol," dated September 1981. Other examples of different types of a packet-based data network include Asynchronous Transfer Mode (ATM), Frame Relay networks, and the like. The data network 110 may refer to one or more communication networks, channels, links, or paths, and systems or devices (such as routers) used to route data over such networks, channels, links, or paths. Consistent with one embodiment, a multi-band network comprising the data network 110 and the PSTN 115, the first and second base stations 120(1-m) and the radio network controller 130 may be defined at least in part by a UMTS protocol. Of course, other embodiments may employ one or more similar protocols in the communications system 100.

Persons of ordinary skill in the pertinent art should appreciate that the communications system 100 is not limited to the mobile wireless devices 105(1-N) and the first and a second base station 120(1-m). Those skilled in the art will also appreciate that the communications system 100 enables the mobile wireless devices 105(1-N) to communicate with the data network 110 and/or the PSTN 115. It should be understood, however, that the configuration of the communications system 100 of Figure 1 is exemplary in nature, and that fewer or additional components may be employed in other embodiments of the communications system 100 without departing from the spirit and scope of the instant invention. For example, any desirable number of communication devices may be included in the communications system 100. Furthermore, the communication devices may include any desirable number of the mobile wireless devices 105(1-N) and/or the first and a second base stations 120, as well as any other desirable type of device.

In one embodiment, wireless communications the mobile wireless devices 105(1-N) and the first and a second base station 120(1-m) may be established according to any one or more of network and/or communication protocols including, but not limited to, a UMTS protocol, a Global System for Mobile communications (GSM) protocol, a Code Division Multiple Access (CDMA) protocol, such as Wide Code Division Multiple Access (WCDMA) protocol and the like. Use of a particular protocol in the communications system 100 to communicate over a wireless communication medium is a matter of design choice and not necessarily material to the present invention. Thus, only relevant aspects of the communications system 100 that are material to the instant invention are described below.

While the first base station 120(1) may couple to a first antenna 125(1), the second base station 120(m) may couple to a first antenna 125(m) for wirelessly communicating with any one of the mobile wireless devices 105(1-N). The mobile wireless device 105 may take the form of any of a variety of devices, including cellular phones, personal digital assistants (PDAs), laptop computers, digital pagers, wireless cards, and any other device capable of accessing the data network 110 and/or the PSTN 115 through the first and second base stations 120(1-m).

According to one embodiment, the first and second base stations 120(1-m) may be coupled to a Radio Network Controller (RNC) 130 by one or more connections 135, such as T1/E1 lines or circuits, ATM virtual circuits, cables, optical digital subscriber lines (DSLs), and the like. Although one RNC 130 is illustrated, those skilled in the art will appreciate that a plurality of RNCs 130 may be utilized to interface with a large number of base stations 120. Generally, the RNC 130 operates to control and coordinate the first and second base stations 120(1-m) to which it is connected. The RNC 130 of Figure 1 generally provides replication, communications, runtime, and system management services, and, as discussed below in more detail below, may be involved in coordinating the transition of the mobile wireless device 105(1) during transitions between the first and second base stations 120(1-m).

Consistent with one embodiment, the RNC 130 may be coupled to a Core Network (CN) 140 via a connection 145, which may take on any of a variety of forms, such as T1/E1 lines or circuits, ATM virtual circuits, cables, optical digital subscriber lines (DSLs), and the like.

Generally the CN 140 operates as an interface to the data network 110 and/or to the public telephone system (PSTN) 115. The CN 140 performs a variety of functions and operations, such as user authentication, however, a detailed description of the structure and operation of the CN 140 is not necessary to an understanding and appreciation of the instant invention. Accordingly, to avoid unnecessarily obfuscating the instant invention, further details of the CN 140 are not presented herein.

The mobile wireless device 105(N) is shown to include a receiver 150, a transmitter 155, a controller 160, an antenna 165, a memory 170 storing instructions, such as a pilot power measuring software (S/W) 175. The controller 160, in the illustrated embodiment, controls the flow of information between the first and second base stations 120(1-m) and the RNC 130. The RNC 130 may comprise a storage 180 storing instructions, such as a cell load based inter-frequency handover software (S/W) 185. However, persons of ordinary skill in the art should appreciate that the present invention is not so limited. That is, instructions of the pilot power measuring S/W 175 and the cell load based inter-frequency handover S/W 185 may be implemented in any desirable number of entities and may be stored in other desirable forms, such as firmware and/or hardware logic.

In one embodiment, the transmitter 155 may transmit one or more encoded signals provided by the controller 160 using the antenna 165 and the receiver 150 may receive encoded signals. Likewise, each base station 120 is capable of transmitting and receiving signals. For example, the mobile wireless device 105(1) and the first and second base stations 120(1-m) may exchange a variety of frames including control frames, data frames, fill frames, and idle frames over an air interface.

In this manner, using the S/W 175, the controller 160 generally operates to control both the transmission and reception of data and control signals over the antenna 165 on a multiplicity of channels including a shared channel, a data channel, and a control channel and to communicate information to and from the RNC 130 via the transmitter 155 and the receiver 150, respectively. Using the S/W 185, the multiplicity of channels may be used to effect a controlled scheduling of communications from the mobile wireless device 105(N) to the first and/or the second base stations 120(1-m).

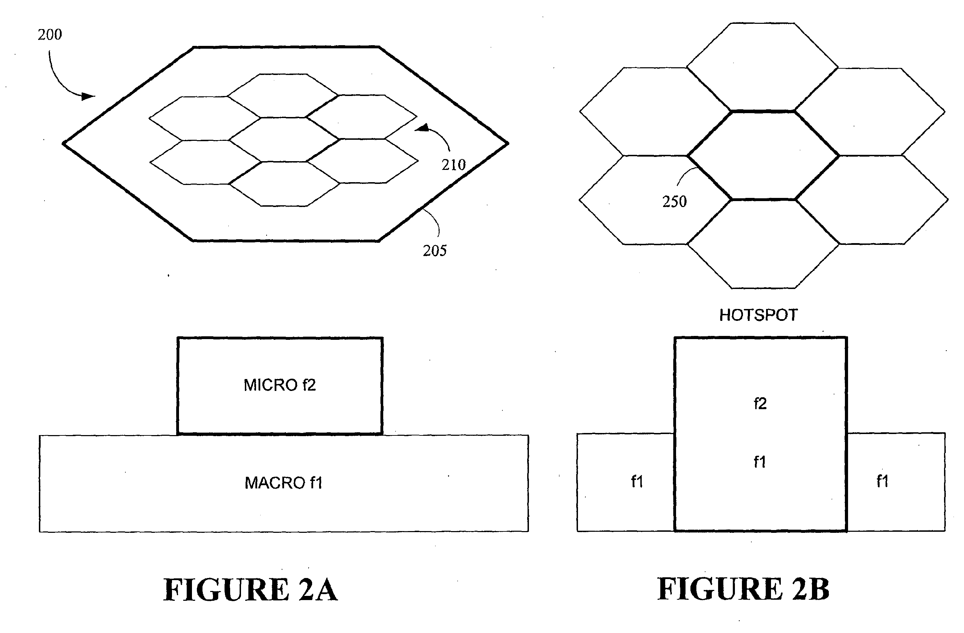

Referring to Figure 2A, a hierarchical cell structure 200 consistent with an embodiment of the instant invention is schematically depicted with two frequency bands for the communications system 100 shown in Figure 1. For the hierarchical cell structure 200, a first frequency ($f_1$) is assigned to macro cells 205 and a second frequency ($f_2$) to micro cells 210 to benefit from the combined radio resources of a first and a second frequency band in a multi-band network, such as a multi-band UMTS network. The macro cells 205 may be relatively large cells, e.g., tens of square miles in area that are optimized to provide coverage over capacity. Instead, the micro cells 210 may be relatively small cells within a cellular network, enabling a greater frequency reuse by allowing radio frequency propagation to be confined to a small local area.

Consistent with one particular embodiment, the multi-band UMTS network, e.g., the PSTN 115 and/or the data network 110, such as based on the 3GPP standard, specified in 3GPP TS 25.307, may be operated at two different frequency bands (e.g., UMTS850, LTMTS1900, etc.). As described above, use of the pilot power measuring S/W 175 and the cell load based inter-frequency handover S/W 185 with these two different coexistent (co-local) frequency bands may offer a relatively higher system capacity and a relatively better Quality of Service (QoS) in the communications system 100.

Referring to Figure 2B, a hotspot 250 is schematically depicted as another example scenario in the communications system 100 shown in Figure 1 where the second frequency ($f_2$) is allocated besides the first frequency ($f_1$) to split the hotspot 250 consistent with an embodiment of the instant invention. The hotspot 250 in the macro cells 205 may correspond to a situation where a relatively large number of users gather in a relatively small area within a cell or a sector, for example, an audience gathered in an auditorium. For a macro cell environment, thus, the hotspot 250 may refer to a single point within a cell or a sector. In one embodiment, the pilot power measuring S/W 175 along with the cell load based inter-frequency handover S/W 185 may cooperatively enable an increase in system capacity of the communications system 100 while significantly improving QoS.

In a UMTS network, e.g., the data network 110; however, the load of cells is controlled via Call Admission Control (CAC) and Congestion Control (ConC) by power rise/noise rise measurements. [See Harri Holma, Antti Toskala: WCDMA for UMTS, John Wiley & Sons, 2002]. The Connection Admission Control generally refers to a set of actions taken by a network, such as the data network 110 during a call set-up phase (or during a call re-negotiation phase) to determine whether a connection request may be accepted or should be rejected (or whether a request for re-allocation may be accommodated).

According to an exemplary embodiment, the Connection Admission Control may enable the data network 110 to manage traffic in an incoming call, a session or at a connection level based on predefined criteria. The Connection Admission Control may enable a cell to reject or admit one or more users according to an objective function, while guaranteeing a QoS to any new users as well as the active users. More specifically, switches in the data network 110 may use a CAC function during a connection setup to determine whether or not a connection requested QoS will violate QoS for existing connections.

Furthermore, the Congestion Control may maintain an operating state for the data network 110 when demand exceeds capacity of the communications system 100. In particular, a ConC function may perform a radio resource and/or traffic management to avoid and/or prevent undesired situations, such as a buffer overflow, an insufficient bandwidth that may cause the data network 110 to malfunction.

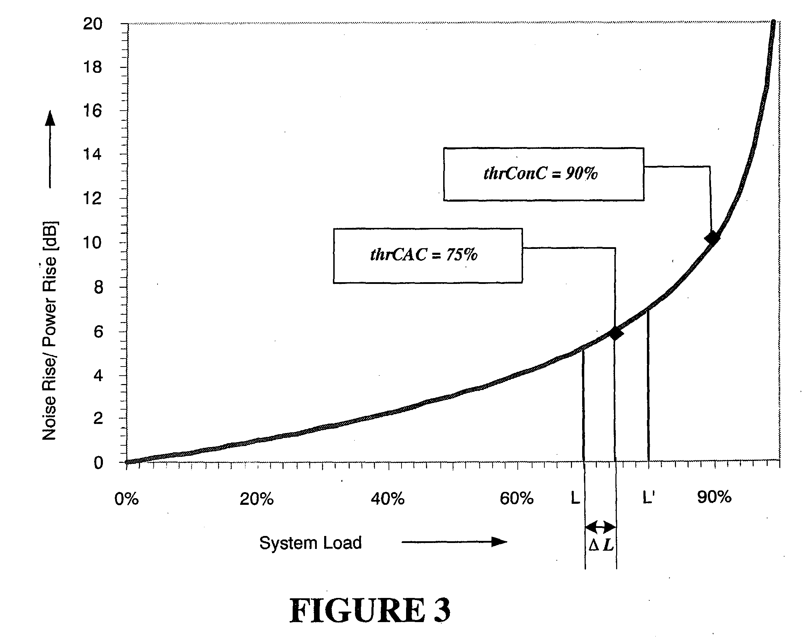

Referring to Figure 3, a flow chart illustrates power rise/noise rise versus system load in the communications system 100 shown in Figure 1 as well as a typical Call Admission Control (CAC) threshold and Congestion Control (ConC) threshold in accordance with one embodiment of the present invention. The Connection Admission Control may restrict new calls of different types of real-time applications based on a Connection Admission Control threshold. In that case, as shown in Figure 3, a CAC threshold (thrCAC) may refer to a number of slots that a new call of each type of real-time application may use in a wireless mobile telecommunications system, such as the telecommunication system 100 when using a Time Division Multiple Access modulation. The CAC threshold may define call blocking and forced termination probabilities. As shown in Figure 3, a ConC threshold (thrConC) may refer to a maximum allowable backlog of frames that a transport layer (L4) of the data network 110 may buffer before sending a choke message and a maximum allowable backlog of frames that a link layer (L2) of the data network 110 may buffer before sending a control frame.

In one embodiment, the system load comprises cell load, which is currently being experienced in a cell. The cell load may be determined in a variety of ways without departing from the spirit and scope of the instant invention. For example, the cell load may be calculated as a function of the number of mobile stations currently connected to the cell. Alternatively, the cell load may be determined as a function of the aggregate transmission rate between the various mobile wireless devices 105(1-N) and the first or second base station 120(1-m). That is, one heavy user may place similar demands to three relatively light users. Furthermore, the cell load may be determined by the ratio of the actual measured transmitted power of the cell to the total maximum transmit power.

However, the mobile wireless device 105(N), while located at a same position, may communicate with more than one cell. For example, with one cell at the frequency band (f1) and another cell at the frequency band (f2). The mobile wireless device 105(N) may measure pilot power of at least two Common Pilot Channels (CPICHs) one for each frequency band, *i.e.,* a first and a second common pilot channel where a common pilot channel is broadcast within the entire cell. The first common pilot channel may be associated with the first frequency band (f1) from the first base station 120(1) associated with a first cell and the second common pilot channel may be associated with the second frequency band (f2) from the first base station 120(1) being associated with a second cell or from the second base station 120(m) being associated with the second cell.

In operation, according to one embodiment, for an inter-frequency handover, the mobile wireless device 105(N) may transfer from its home cell (e.g., at frequency (f1)), *i.e.,* the first cell associated with the first base station 120(1) to a new cell, *i.e.,* the second cell (i) at the frequency (f2) and associated with the same first base station 120(1) or (ii) at the frequency (f2) and associated with another base station, such as the second base station 120(m) or at the frequency (f1) and associated with the second base station 120(m) in a conventional or non-inter-frequency handover. That is, the mobile wireless device 105(N) may not change from one base station to another base station in at each inter-frequency handover.

A cell load for a cell in the communications system 100 may adversely affect a ranking of the cells in a target set of cells. Specifically, for example, the two mobile wireless devices 105(1) and 105(N), such as mobile stations, one located near a particular base station and the other one located far away therefrom may measure different values of $E_c/I_0$ on the first and second common pilot channels, P-CPICH because of factors including different path loss, intra-cell and inter-cell interference. The term *Ec/Io* may represent a dimensionless ratio of the average power of a channel, typically the first and second common pilot channels, to the total signal power.

More specifically, in Figure 3, a load parameter L denotes the cell load before the arrival of a new user while a load parameter *L'* indicates the cell load after the arrival of a new user. The mobile wireless device 105(N) may wish to transfer from an overloaded cell to a target cell because of a higher $E_C/I_0$ on the CPICH while taking into account the load parameter L in the target cell. If the cell load in the target cell is a bit less ($\Delta$L) than the CAC threshold level (thrCAC), then the handover of the user to this cell may lead to load *L',* and, therefore, may avoid trespassing CAC threshold (thrCAC). Absent this trespassing, the cell load based inter-frequency handover S/W 185 may avoid triggering of a call admission control mechanism that otherwise result in a significant deterioration of a link quality of other users in the target cell. In other words, avoidance of an inefficient inter-frequency handover may prevent a significant loss of network capacity.

Instead of using only the $E_C/I_0$ values of the P-CPICH, the cell load based inter-frequency handover S/W 185 takes additionally into account the network or system load measurements via a generic function " *f.* " In this function, the term(s) according to signal quality *(Ec/I_0)* and the load specific one(s) (g(L)) may be combined together in a mathematical operation:

$$ f\left(\frac{E_C}{I_0}, g(L)\right) = \left(\alpha_1 \frac{E_C}{I_0}\right) \circ \left(\alpha_2 g(L)\right) $$

Here symbol "°" denotes a mathematical operation while $a_1$ and $a_2$ is the weighting factor which may be adjusted by the network operators or service providers to optimize the data network 110. The function g(L) may mathematically take into account the mapping of the load parameter L to the generic function "*f*" for the purposes of an inter-frequency handover. As an illustration, a cell load may be measured as the difference between the current load in the target cell and the CAC threshold (thrCAC), as illustrated in Figure 3. Then, the function g(L) =$\Delta L$ = thrCAC - L. In this example, the generic function may be given by:

$$f\left(\frac{E_c}{I_0}, \Delta L\right) = \left(\alpha_1 \frac{E_c}{I_0}\right) \circ \left(\alpha_2 \Delta L\right)$$

However, persons of ordinary skill in the pertinent art will recognize that any desired function may be used for the function *g(L)* without departing form the scope of the present invention. Using the generic function " *f* ," the cell load based inter-frequency handover S/W 185 may rank the cells in the target set by taking into account both the user specific signal quality and the system load for the inter-frequency handover and load balancing while substantially utilizing available radio resources.

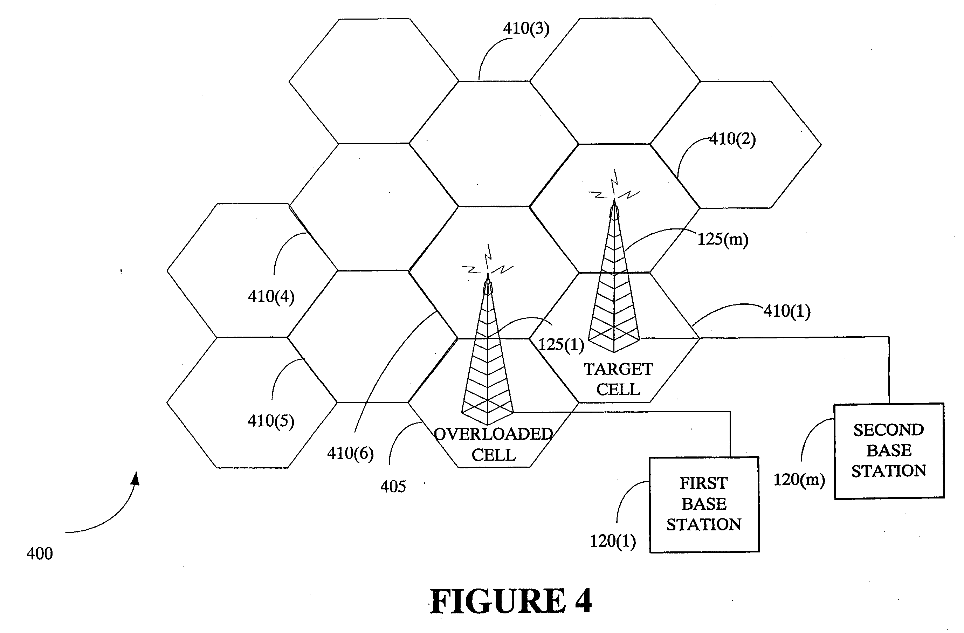

Referring to Figure 4, a stylistic representation of a region 400 is illustrated in which the communications system 100 of Figure 1 may be employed for balancing load in the inter-frequency handover of wireless communications across an overloaded cell 405 and a target cell 410(1) according to one embodiment of the present invention. The region 400, e.g., a network coverage area for rendering a particular service, such as a multimedia data and/or voice communication service to a user may be separated into a plurality of sub-regions called cells or sectors to be serviced by the communications system 100. The network coverage area may refer to a geographical area where devices can exchange messages with an acceptable quality and a performance level. For example, in one embodiment, each cell may be associated with a separate base station 120 and each cell may have a plurality of adjacent neighboring cells. As shown, six neighboring cells 410(1-6) may surround the overloaded cell 405.

Upon entering the overloaded cell 405, the mobile wireless device 105(1) may transfer to another cell, *i.e.,* the first cell 410(1) selected form a target set of cells 405, 410(1) among the neighboring candidate cells 410 (1-6). In Figure 4, it is assumed that a transmission is underway with respect to the mobile wireless device 105 (N) such that the mobile wireless device 105(N) is communicating with the first base station 120(1), but will be transitioning to the second base station 120(m). Thus, as the mobile wireless device 105(1) enters the overloaded cell 405 from any of the neighboring cells 410(1-6), the mobile wireless device 105(1) may need to transition from communicating with the overloaded cell 405 to communicating with a target cell, such as the first cell 410(1) that a user may enter.

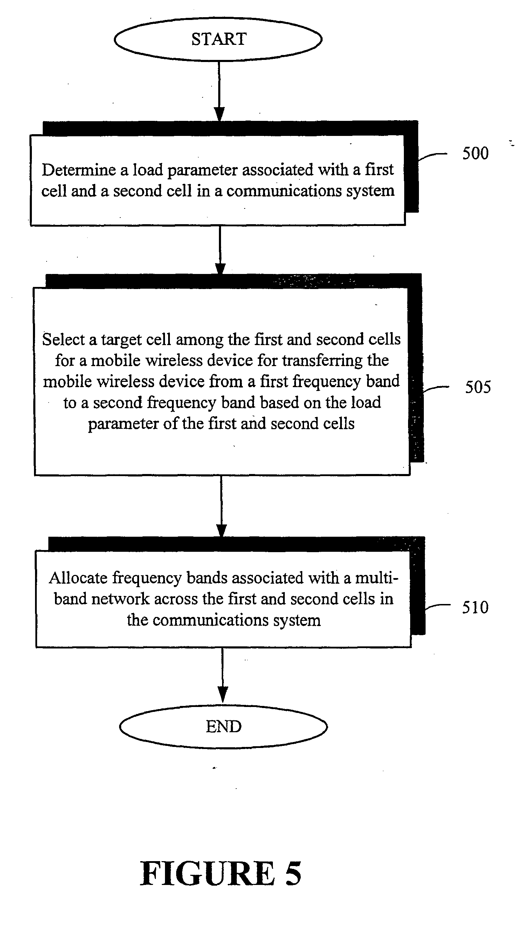

Figure 5 is a flow diagram illustrating one embodiment of the interoperation of the various components including the pilot power measuring S/W 175 at the mobile wireless device 105(N) and the cell load based an inter-frequency handover S/W 185 at the radio network controller 130 coupled to the first base station 120(1) and the second base station 120(m) of the communications system 100 of Figures 1 and 4. The pilot power measuring S/W 175 and the cell load based an inter-frequency handover S/W 185 may cooperatively allocate frequency bands, associated with a multi-band network comprising the data network 110 and the PSTN 115, across the overloaded cell 405 and the target cell 410(1) shown in Figure 4.

In operation, the wireless device 105(N) may wish to transfer from the overloaded cell 405 associated with the first base station 120(1) to enter the target cell 410(1) associated with the second base station 120(m). In one embodiment, while the mobile wireless device 105 (N) may employ a cell selection strategy, the RNC 130 may employ an inter-frequency handover strategy. The process of a cell selection from a target set of cells for an inter-frequency handover begins at block 500 with determining the load parameter L associated with the cells 405, 410(1) in the communications system 100.

Moreover, the mobile wireless device 105(N) may measure certain parameters including pilot power of a common pilot channel associated with the first and second base stations 120(1-m), which may be in its active set to determine the quality of communications. While a communications session is only established with a current serving cell, the mobile wireless device 105(N), using the pilot power measuring S/W 175 nonetheless monitors one or more channels of the other base stations in its active set that would be available should a cell load and pilot power level based cell selection occurs for an inter-frequency handover. In this manner, the mobile wireless device 105(N) and the RNC 130, using the measured pilot power of each of the first and second base stations 120(1-m) and the load parameters L of the target set of cells determine the target cell and/or whether an inter-frequency handover is warranted.

At block 505, using the inter-frequency handover S/W 185, the RNC 130 selects the first cell 410(1) form the target set of the cells 405, 410(1) among candidate cells 405 and 410(1-6) associated with the first and second base stations 120(1-m) based on the load parameters L of the cells 405, 410(1) for the mobile wireless device 105(N).

If an inter-frequency handover is warranted, the RNC 130 may transfer the mobile wireless device 105 (N) from a first frequency band to a second frequency band based on the load parameters L of the cells 405, 410(1) of the target set. At block 510, the communications system 100 may allocate frequency bands to users on a multiplicity of channels associated with a multi-band network across at least two cells, i.e., the first cell 405 and the second cell 410(1). In the illustrated embodiment, the overloaded cell 405 and the selected target cell 410(1) are controlled by different base stations 120(1) and 120(m), respectively.

According to one exemplary embodiment of the present invention, as shown in Figure 4, the RNC 130 may determine whether or not there is a need to switchover from communications between the mobile wireless device 105(N) and the first base station 120(1) to communications between the mobile wireless device 105(N) and the second base station 120(m). To this end, a messaging process may be used to switch over from the overloaded cell 405 to the target cell 410(1). Generally, an actual cell switchover starts when the RNC 130 sends Radio Link Reconfiguration Commit messages to the first base station 120(1) to cease any scheduled transmission at a defined time. The mobile wireless device 105(N) begins "listening" to scheduling information from the target cell 410(1) at the defined time after sending "Physical Channel Reconfiguration Complete" messages.

The first and second base stations 120(1-m) may periodically report Signal to Interference Ratio (SIR) measurements to the RNC 130. The RNC 130 may use feedback of the radio channel conditions, such as SIR from the first and second base stations 120(1-m) in the active set or mobile reported best cell measurement, to trigger switching from the overloaded cell 405 to the target cell 410(1). However, persons of ordinary skill in the art should appreciate that any desirable combination of such measurements or other parameters may determine this switching.

Generally, in one embodiment of the present invention, a conventional signaling may be used to identify the overloaded cell 405 during a cell selection after measurements of the load parameters L made by the RNC 130 indicate to the mobile wireless device 105(N) that the best cell is not the overloaded cell 405. Based on these measurements of the load parameters L, the mobile wireless device 105(N) indicates its new primary serving cell, i.e., the target cell 410(1). Once the cells 405, 410(1-6) receive the indication of the new primary serving cell from the mobile wireless device 105(N), all cells send the primary/non-primary cell indications to the RNC 130. The RNC 130 responds by switching user plane traffic to a transport interface of the new primary or target cell 410(1) using signaling messages.

During a soft handover, for example, the RNC 130 may send the following information to the mobile wireless device 105(N): the cells that the wireless device 105(N) should be monitoring; the radio channel information for any new cells to be monitored. However, the RNC 130 may periodically re-assign which cells in the active set that the mobile wireless device 105(N) should monitor.

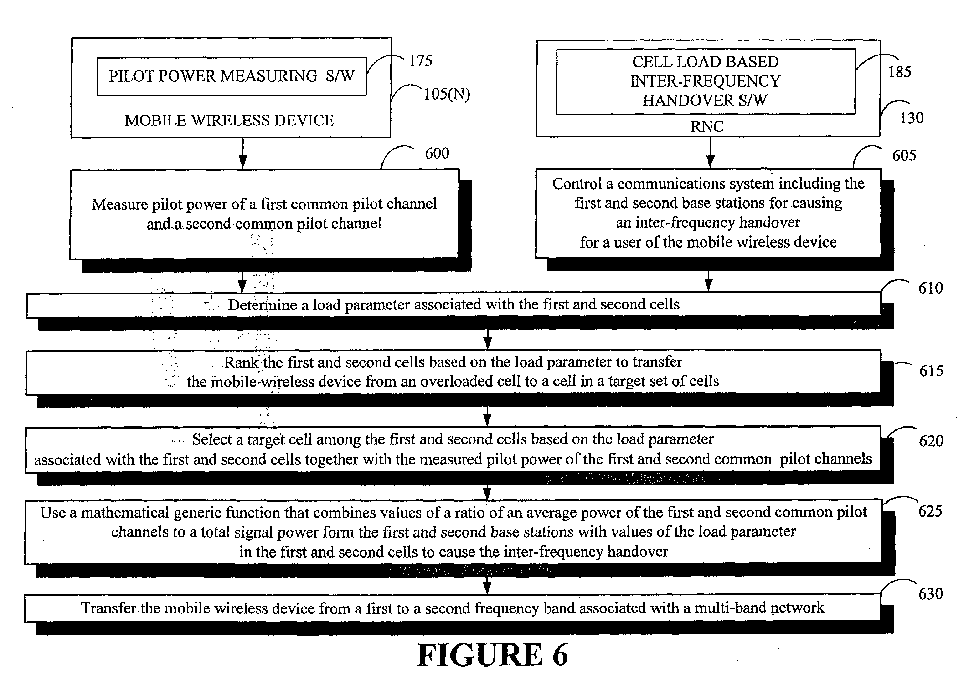

Referring to Figure 6, a flow diagram illustrates one embodiment of a control strategy employed in the communications system 100 of Figures 1-4 for selecting the target cell 410(1) to transfer from the overloaded cell 405 and handling the inter-frequency handover based on the measured pilot power of the first and second common pilot channels and the load parameter L of the overloaded cell 405 and the cell 410(1) shown in Figure 4. Using the S/W 175, at block 600, the mobile wireless device 105(N) may execute instructions to measure the pilot power of a first common pilot channel associated with the first frequency band from the first base station 120(1) associated with a first cell, *i.e.,* the overloaded cell 405 and measure the pilot power of a second common pilot channel associated with the second frequency band from the first base station 120(1) associated with a second cell, *i.e.,* the target cell 410(1) or from the second base station 120(m) associated with the second cell, *i.e.,* the target cell 410(1).

To measure the pilot power of the first and second common pilot channels, at the mobile wireless device 105(N), the S/W 175 may determine signal quality for the first and second cells 445, 410(1) based on a ratio of an average power of the first and second common pilot channels to a total signal power $E_c/I_0$. Likewise, at block 605, using the S/W 185, the RNC 130 may control the communications system 100 by executing instructions that cause an inter-frequency handover for a user of the mobile wireless device 105(N).

At block 610, the S/W 175 and 185 may cooperatively manage radio resources in the first and second base stations 120(1-m) for determining communications between at least one of the first and second base stations 120(1-m) and the mobile wireless device 105(N). The load parameters L associated with the first and second cells 405, 410(1) may be determined by measuring a change in at least one of radio transmit power and noise from the first and second base stations 120(1-m). To transfer the mobile wireless device 105(N) from the overloaded cell 405 to the target cell 410(1), the first and second cells 405, 410(1) of the target set of cells may be ranked based on the corresponding load parameters L, as indicated at block 615.

Thereafter, based on the load parameters L of the first and second cells 405 and 410(1) and the measured pilot power of the first and second common pilot channels, the target cell 410(1) may be selected among the candidate cells 405, 410(1-6) at block 620 for the mobile wireless device 105(N). To select a target cell among the first and second cells 405, 410(1), an overloaded cell may be determined, that is, the first cell 405 may be indicated to be relatively overloaded between the first and second cells 405, 410(1) based on the measured pilot power of the first and second common pilot channels together with the load parameter of the first and second cells 405, 410(1). In response to the mobile wireless device 105(N) indicating a desire to transfer from the overloaded cell 405, the RNC 130 may select from the target set of cells 405, 410(1), the target cell 410(1) with a load that balances load in the communications system 100, substantially preventing the inter-frequency handover of the user to a cell with a higher load than the overloaded cell 405.

At block 625, using a mathematical generic function, " $f$," as set forth above, that combines values of a ratio of an average power of the first and second common pilot channels to a total signal power $E_c/I_0$ form the first and second base stations 120(1-m) with values of the load parameter L in the first and second cells 405, 401(1), the RNC 130 may cause the inter-frequency handover. The mobile wireless device 105(N) may then be transferred from one frequency band to another frequency band, such as from a higher frequency band to a lower frequency band or vice versa, as indicated in block 630. One example of the higher frequency band includes 2000 MHz and examples of lower frequency bands include 900 MHz or 450 MHz.

Thus, in a multi-band network, the pilot power measuring S/W 175 and the cell load based inter-frequency handover S/W 185 may cause transfer of the mobile wireless device 105(N) to a desired frequency band. Therefore, in one embodiment, selection of an appropriate frequency band may be realized for the mobile wireless device 105(N) in the multi-band network based on measurements of the first and second pilot channel properties and the load parameters L by taking into account the load of the cells for an inter-frequency handover. This integration of the load into the ranking of the target set cells may prevent an inter-frequency handover of users to cells with a relatively higher load, resulting in a deterioration of QoS. The RNC 130 may increase, therefore, an overall system capacity as well as the QoS of the data network 110, leading to a significantly higher user satisfaction, in some embodiments. For example, by monitoring the IuB-Interface to track radio resource management messages including load measurements.

Portions of the present invention and corresponding detailed description are presented above in terms of software, or algorithms and symbolic representations of operations on data bits within a storage device or a semiconductor memory associated with a computing device, such as a computer or controller. These descriptions and representations are the ones by which those of ordinary skill in the art effectively convey the substance of their work to others of ordinary skill in the art. An algorithm, as the term is used here, and as it is used generally, is conceived to be a self-consistent sequence of steps leading to a desired result. The steps are those requiring physical manipulations of physical quantities. Usually, though not necessarily, these quantities take the form of optical, electrical, or magnetic signals capable of being stored, transferred, combined, compared, and otherwise manipulated. It has proven convenient at times, principally for reasons of common usage, to refer to these signals as bits, values, elements, symbols, characters, terms, numbers, or the like.

It should be borne in mind, however, that all of these and similar terms are to be associated with the appropriate physical quantities and are merely convenient labels applied to these quantities. Unless specifically stated otherwise, or as is apparent from the discussion, terms such as "processing" or "computing" or "calculating" or "determining" or "displaying" or the like, refer to the action and processes of a computing system, or similar electronic computing device, that manipulates and transforms data represented as physical, electronic quantities within the computer system's registers and memories into other data similarly represented as physical quantities within the computer system memories or registers or other such information storage, transmission or display devices.

Note also that the software implemented aspects of the invention are typically encoded on some form of program storage medium or implemented over some type of transmission medium. The program storage medium may be magnetic (e.g., a floppy disk or a hard drive) or optical (e.g., a compact disk read only memory, or "CD ROM"), and may be read only or random access. Similarly, the transmission medium may be twisted wire pairs, coaxial cable, optical fiber, or some other suitable transmission medium known to the art. The invention is not limited by these aspects of any given implementation.

The present invention will now be described with reference to the attached figures. Various structures, systems and devices are schematically depicted in the drawings for purposes of explanation only and so as to not obscure the present invention with details that are well known to those skilled in the art. Nevertheless, the attached drawings are included to describe and explain illustrative examples of the present invention. The words and phrases used herein should be understood and interpreted to have a meaning consistent with the understanding of those words and phrases by those skilled in the relevant art. No special definition of a term or phrase, i.e., a definition that is different from the ordinary and customary meaning as understood by those skilled in the art, is intended to be implied by consistent usage of the term or phrase herein. To the extent that a term or phrase is intended to have a special meaning, i.e., a meaning other than that understood by skilled artisans, such a special definition will be expressly set forth in the specification in a definitional manner that directly and unequivocally provides the special definition for the term or phrase.

While the invention has been illustrated herein as being useful in a telecommunications network environment, it also has application in other connected environments. For example, two or more of the devices described above may be coupled together via device-to-device connections, such as by hard cabling, radio frequency signals (e.g., 802.11(a), 802.11(b), 802.11(g), Bluetooth, or the like), infrared coupling, telephone lines and modems, or the like. The present invention may have application in any environment where two or more users are interconnected and capable of communicating with one another.

Those skilled in the art will appreciate that the various system layers, routines, or modules illustrated in the various embodiments herein may be executable control units. The control units may include a microprocessor, a microcontroller, a digital signal processor, a processor card (including one or more microprocessors or controllers), or other control or computing devices as well as executable instructions contained within one or more storage devices. The storage devices may include one or more machine-readable storage media for storing data and instructions. The storage media may include different forms of memory including semiconductor memory devices such as dynamic or static random access memories (DRAMs or SRAMs), erasable and programmable read-only memories (EPROMs), electrically erasable and programmable read-only memories (EEPROMs) and flash memories; magnetic disks such as fixed, floppy, removable disks; other magnetic media including tape; and optical media such as compact disks (CDs) or digital video disks (DVDs). Instructions that make up the various software layers, routines, or modules in the various systems may be stored in respective storage devices. The instructions, when executed by a respective control unit, causes the corresponding system to perform programmed acts.

The particular embodiments disclosed above are illustrative only, as the invention may be modified and practiced in different but equivalent manners apparent to those skilled in the art having the benefit of the teachings herein. Furthermore, no limitations are intended to the details of construction or design herein shown, other than as described in the claims below. It is therefore evident that the particular embodiments disclosed above may be altered or modified and all such variations are considered within the scope and spirit of the invention. Accordingly, the protection sought herein is as set forth in the claims below.

**Claims**

1. A method for allocating frequency bands associated with a multi-band network across a first and a second cell in a communications system, the method comprising:

   determining a load parameter associated with said first and second cells in the communications system; and
   based on the load parameter of said first and second cells, selecting a target cell among said first and second cells for a mobile wireless device for transferring said mobile wireless device from a first frequency band to a second frequency band.

2. A method, as set forth in claim 1, further comprising:

   measuring at said mobile wireless device pilot power of a first common pilot channel associated with said first frequency band from a first base station associated with said first cell;
   measuring at said mobile wireless device pilot power of a second common pilot channel associated with said second frequency band from said first base station associated with said second cell or from a second base station associated with said second cell; and
   causing an inter-frequency handover on a multiplicity of channels for a user of said mobile wireless device based on the measured pilot power of said first and second common pilot channels together with the load parameter of said first and second cells.

3. A method, as set forth in claim 2, further comprising:

   determining signal quality at said mobile wireless device for said first and second cells based on a ratio of an average power of said first and second common pilot channels to a total signal power; and
   determining an overloaded cell between said first and second cells based on the measured pilot power of said first and second common pilot channels together with the load parameter of said first and second cells.

4. A method, as set forth in claim 3, further comprising:

   ranking said first and second cells based on the load parameter to transfer said mobile wireless device from said overloaded cell to said target cell.

5. A method for controlling a communications system including a first and a second base station and a radio network controller, the method comprising:

   determining a load parameter associated with said first and second cells in the communications system;
   executing instructions at a mobile wireless device to measure pilot power of a first common pilot channel associated with a first frequency band from a first base station associated with said first cell;
   executing instructions at said mobile wireless device to measure pilot power of a second common pilot channel associated with a second frequency band from said first base station associated with said second cell or from a second base station associated with said second cell;
   executing instructions at said radio network controller to cause an inter-frequency handover for a user of said mobile wireless device; and
   selecting a target cell among said first and second cells for transferring said mobile wireless device from said first to said second frequency band associated with a multi-band network based on the load parameter associated with said first and second cells together with the measured pilot power of said first and second common pilot channels.

6. A communications system comprising:

a first and a second base station associated with a multi-band network;
a radio network controller coupled to said first and second base stations; and
a storage coupled to said radio network controller, said storage storing instructions to cause an inter-frequency handover for a user of a mobile wireless device that determines a load parameter associated with a first and second cell in the communications system, measures pilot power of a first common pilot channel associated with a first frequency band from a first base station associated with said first cell and measures pilot power of a second common pilot channel associated with a second frequency band from said first base station associated with said second cell or from a second base station associated with said second cell, and selects a target cell among said first and second cells for transferring said mobile wireless device from said first to said second frequency band associated with a multi-band network based on the load parameter associated with said first and second cells together with the measured pilot power of said first and second common pilot channels.

7. An article comprising a computer readable storage medium storing instructions that, when executed cause a communications system to:

determine a load parameter associated with a first and a second cell in the communications system for allocating frequency bands associated with a multi-band network across said first and second cells in the communications system; and
based on the load parameter of said first and second cells, select a target cell among said first and second cells for a mobile wireless device for transferring said mobile wireless device from a first frequency band to a second frequency band.

8. An article comprising a computer readable storage medium storing instructions that, when executed cause a communications system to:

determine a load parameter associated with a first and a second cell in the communications system for controlling the communications system including a first and a second base station and a radio network controller;
execute instructions at a mobile wireless device to measure pilot power of a first common pilot channel associated with a first frequency band from a first base station associated with said first cell;
execute instructions at a mobile wireless device to measure pilot power of a second common pilot channel associated with a second frequency band from said first base station associated with said second cell or from a second base station associated with said second cell;
execute instructions at said radio network controller to cause an inter-frequency handover for a user of said mobile wireless device; and
select a target cell among said first and second cells for transferring said mobile wireless device from a first to a second frequency band associated with a multi-band network based on the load parameter associated with said first and second cells together with the measured pilot power of said first and second common pilot channels.

9. An apparatus for allocating frequency bands associated with a multi-band network across a first and a second cell in a communications system, the apparatus comprising:

means for determining a load parameter associated with said first and second cells in the communications system; and
means for selecting a target cell among said first and second cells for a mobile wireless device for transferring said mobile wireless device from a first frequency band to a second frequency band based on the load parameter of said first and second cells.

10. An apparatus for controlling a communications system including a first and a second base station and a radio network controller, the apparatus comprising:

means for determining a load parameter associated with said first and second cells in the communications system;
means for executing instructions at a mobile wireless device to measure pilot power of a first common pilot channel associated with a first frequency band from a first base station associated with said first cell;
means for executing instructions at said mobile wireless device to measure pilot power of a second common pilot channel associated with a second frequency band from said first base station associated with said second cell or from a second base station associated with said second cell;

means for executing instructions at said radio network controller to cause an inter-frequency handover for a user of said mobile wireless device; and

means for selecting a target cell among said first and second cells for transferring said mobile wireless device from said first to said second frequency band associated with a multi-band network based on the load parameter associated with said first and second cells together with the measured pilot power of said first and second common pilot channels.

FIGURE 1

200

210

205

FIGURE 2A

MICRO f2

MACRO f1

250

HOTSPOT

f2

f1

f1

f1

FIGURE 2B

EP 1 686 821 A1

EP 1 686 821 A1

**FIGURE 3**

**FIGURE 4**

START

Determine a load parameter associated with a first cell and a second cell in a communications system — 500

Select a target cell among the first and second cells for a mobile wireless device for transferring the mobile wireless device from a first frequency band to a second frequency band based on the load parameter of the first and second cells — 505

Allocate frequency bands associated with a multi-band network across the first and second cells in the communications system — 510

END

# FIGURE 5

| PILOT POWER MEASURING S/W | ⌐ 175 |

175

105(N)

MOBILE WIRELESS DEVICE

| CELL LOAD BASED INTER-FREQUENCY HANDOVER S/W | 185 |

RNC                130

600

Measure pilot power of a first common pilot channel and a second common pilot channel

605

Control a communications system including the first and second base stations for causing an inter-frequency handover for a user of the mobile wireless device

610

Determine a load parameter associated with the first and second cells

615

Rank the first and second cells based on the load parameter to transfer the mobile wireless device from an overloaded cell to a cell in a target set of cells

620

Select a target cell among the first and second cells based on the load parameter associated with the first and second cells together with the measured pilot power of the first and second common pilot channels

625

Use a mathematical generic function that combines values of a ratio of an average power of the first and second common pilot channels to a total signal power form the first and second base stations with values of the load parameter in the first and second cells to cause the inter-frequency handover

630

Transfer the mobile wireless device from a first to a second frequency band associated with a multi-band network

## FIGURE 6

**European Patent Office**

**EUROPEAN SEARCH REPORT**

Application Number

EP 05 25 0916

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | WO 2004/057899 A (NOKIA CORPORATION; VAEISAENEN, ARI; SINIVAARA, HASSE) 8 July 2004 (2004-07-08) * page 4, line 20 - line 31 * * page 8, line 6 - page 9, line 4 * * page 9, line 28 - page 10, line 31 * * page 11, line 23 - page 12, line 10 * * page 18, line 24 - page 19, line 4 * * page 20, line 1 - page 21, line 19 * * page 22, line 19 - page 25, line 30 * * page 26, line 25 - page 27, line 27 * * abstract * | 1-10 | H04Q7/38 |
| X | US 2004/120286 A1 (SCHWARZ UWE) 24 June 2004 (2004-06-24) * paragraphs [0006], [0007] * * paragraphs [0010], [0011], [0021] * * paragraph [0026] - paragraph [0029] * * paragraph [0032] - paragraph [0036] * * paragraph [0051] - paragraph [0055] * * paragraph [0059] - paragraph [0067] * * figures 3,4 * | 1,6,7,9 | |
| X | US 2004/121777 A1 (SCHWARZ UWE ET AL) 24 June 2004 (2004-06-24) * paragraph [0005] - paragraph [0012] * * paragraph [0016] - paragraph [0019] * * paragraphs [0042], [0043] * * paragraph [0047] - paragraph [0052] * * paragraph [0057] - paragraph [0061] * * figure 2 * * abstract * | 1,6,7,9 | TECHNICAL FIELDS SEARCHED (Int.Cl.7) H04Q H04L |

-/--

The present search report has been drawn up for all claims

| Place of search | Date of completion of the search | Examiner |
|---|---|---|
| Munich | 4 July 2005 | Bösch, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

**EUROPEAN SEARCH REPORT**

Application Number

EP 05 25 0916

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 6 021 123 A (MIMURA ET AL) 1 February 2000 (2000-02-01) * column 8, line 36 - column 9, line 7 * * column 9, line 51 - column 10, line 63 * * column 11, line 31 - line 60 * * column 12, line 17 - column 13, line 8 * * figures 11,13 * ----- | 1,6,7,9 | |
| | | | TECHNICAL FIELDS SEARCHED (Int.Cl.7) |

The present search report has been drawn up for all claims

| Place of search | Date of completion of the search | Examiner |
|---|---|---|
| Munich | 4 July 2005 | Bösch, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

    ...................................................................

& : member of the same patent family, corresponding document

EPO FORM 1503 03.82 (P04C01)

**EP 1 686 821 A1**

## ANNEX TO THE EUROPEAN SEARCH REPORT
## ON EUROPEAN PATENT APPLICATION NO.

EP 05 25 0916

This annex lists the patent family members relating to the patent documents cited in  the above-mentioned European search report.
The members are as contained in the European Patent Office EDP file on
The European Patent Office is in no way  liable for these particulars which are merely  given for the purpose of information.

04-07-2005

| Patent document cited in search report | | Publication date | Patent family member(s) | | Publication date |
|---|---|---|---|---|---|
| WO 2004057899 | A | 08-07-2004 | WO | 2004057899 A1 | 08-07-2004 |
| | | | AU | 2002348739 A1 | 14-07-2004 |
| US 2004120286 | A1 | 24-06-2004 | NONE | | |
| US 2004121777 | A1 | 24-06-2004 | WO | 02089514 A1 | 07-11-2002 |
| | | | EP | 1386511 A1 | 04-02-2004 |
| US 6021123 | A | 01-02-2000 | JP | 3274337 B2 | 15-04-2002 |
| | | | JP | 9187055 A | 15-07-1997 |

EPO FORM P0459

For more details about this annex : see Official Journal of the European Patent Office, No. 12/82